# EUROPEAN PATENT SPECIFICATION

(11) **EP 4 467 465 B1**
(45) Date of publication and mention of the grant of the patent: **15.04.2026**
(21) Application number: 24175880.4
(22) Date of filing: 15.05.2024
(51) Int. Cl.: B64D 37/00, B64D 37/32, G01F 23/14, G01F 23/16, G01F 23/18

(54) **FUEL TANK MONITORING SYSTEM**
KRAFTSTOFFTANKÜBERWACHUNGSSYSTEM
SYSTÈME DE SURVEILLANCE DE RÉSERVOIR DE CARBURANT

(30) Priority: 25.05.2023 GB 202307860
(43) Date of publication of application: 27.11.2024
(73) Proprietor: Airbus Operations Limited, Bristol BS34 7PA (GB)
(72) Inventor: VIGNOLA, Dylan, Bristol, BS34 7PA (GB); FALLON, Adan, Bristol, BS34 7PA (GB)
(74) Representative: Pilcher, Adam

(56) References cited:
- EP-A1- 4 246 099
- US-A- 6 157 894
- US-A1- 2006 266 111
- US-A1- 2012 067 133
- US-A1- 2018 052 029
- US-A1- 2018 299 314
- US-A1- 2023 122 403

## Description

### FIELD OF THE INVENTION

The present invention relates to systems and methods for monitoring the condition of aircraft fuel tanks.

### BACKGROUND OF THE INVENTION

Aircraft fuel tank systems rely on controlled pressures throughout the system to operate as designed. The fuel tanks are vented to the ambient atmosphere to maintain the fuel tank pressures within their normal operating range. The fuel tank system is susceptible to vent blockages or other abnormal conditions, for example due to ice or other foreign object debris (FOD). The fuel tank system is designed to provide redundancy in case of such blockages or abnormalities but it is important to restore the redundancy as soon as possible to avoid the risk of fuel overspills or other undesirable events. Current methods for monitoring the condition of fuel tank systems are generally limited to manual checks and tests once an aircraft is on the ground. These checks and tests may be performed during manufacture of the aircraft, e.g. on the final assembly line, and during routine or period maintenance or when failures are detected. These checks can increase the amount of time the aircraft needs to spend on the ground, which has an impact on production and operating costs of the aircraft. Some of the current tests can cause fuel overspills if performed incorrectly.

It is an aim to improve upon the limitations of current aircraft fuel tank systems and their operation.

US 2012/067133 A1 describes a system that monitors the pressure inside a pressurised tank, suitable for determining the volume of a liquid contained within the tank, by measuring the pressure of both the liquid in the tank and the ullage space above the liquid.

EP 4 246 099 A1 describes a system of pressure based gauging for an aircraft, that uses optical pressure gauges to determine the volume of fuel inside a fuel tank, reducing the need to install sensors and wiring within a tank. Optical pressure sensors are used as differential and absolute pressure sensors to determine fuel quantity on the ground and in flight.

US 2006/266111 discloses a fuel monitoring system with a differential pressure sensor.

### SUMMARY OF THE INVENTION

A first aspect of the invention provides an aircraft fuel tank monitoring system according to claim 1.

The first sensor may be submerged in fuel in the fuel tank, e.g. near the bottom of the fuel tank. The second sensor may be above the level of liquid fuel in the fuel tank, e.g. near the top of the fuel tank. Pressure changes which over time deviate from normally expected values may indicate blockages or obstructions or failures in the aircraft fuel tank system.

The ullage space is fluidly coupled to the ambient atmosphere external to the aircraft via a vent. The ullage space may normally have a pressure substantially equal to the ambient pressure or the ullage pressure may be higher or lower than the ambient pressure. The processor may be configured to monitor the pressure changes and to determine a fault if a blockage in the vent or in a vent line between the ullage space and the vent is deduced from the monitored pressure changes exceeding normal operating conditions. Vents and vent lines connecting an ullage to ambient may be susceptible to risk of blockage due to FOD entering the vent or vent line.

The fuel tank may be fluidly coupled to a surge tank. The processor may be configured to monitor the pressure changes and to determine a fault if an imminent overspill from the fuel tank to the surge tank is deduced from the monitored pressure changes exceeding normal operating conditions. Surge tanks are used to temporarily contain fuel that has escaped the fuel tank, which can occur as a result of a vent blockage, and to prevent the overspill of fuel from the surge tank to the ambient atmosphere. Using a monitoring system to determine when a fuel tank overspill is imminent may allow other mitigating actions to be taken before the surge tank becomes utilised.

The ullage space may be coupled to ambient via a pressure relieving system. The pressure relieving system may be arranged to prevent an under- or over-pressure situation arising within the fuel tanks that could otherwise cause damage to the fuel tank structure. Consequently, the pressure relieving system is typically a stand alone passive fail-safe system, such as a burst disk valve. Whereas previously the pressure relieving system may have required a visual inspection to determine whether the pressure relieving system had activated, the processor may be configured to determine activation of the pressure relieving system from the monitored pressure changes. This may give far greater information about the activation of the pressure relieving system than has previously been available, e.g. the pressure at the time of the activation, and the lead up to the scenario at which the pressure situation occurred, and also confirmation that the pressure relieving system has activated during the flight rather than the need for a later visual inspection when the aircraft is back on the ground.

The processor is configured to determine a fault if both the pressure of the fuel within the fuel tank and the pressure of the ullage space within the fuel tank increase over the time period. When operating normally an increase in the head of pressure of the fuel, i.e. due to an increasing fuel level during refuelling or fuel transfer between tanks during flight, should be accompanied by a steady pressure of the ullage space as the ullage is vented to ambient. An increase in both the pressure of the fuel within the fuel tank and the pressure of the ullage space may indicate a blockage in the vent as the ambient air pressure will remain substantially constant when the aircraft is on the ground or in cruise flight. The monitoring system may determine a fault in this scenario, the refuelling or fuel cross transfer operation may then be paused and the fault investigated, before a fuel overspill or fuel tank over-pressurisation event occurs. This brings several advantages because the vent blockage can be determined and resolved and the other fuel system fail-safe measures are not then utilised, which may have environmental, cost and time benefits.

The processor may be configured to calculate a change in a volume of the fuel within the fuel tank based on the first sensor. The processor may be configured to determine a fault if both the volume of the fuel within the fuel tank, corresponding to a head of pressure of the fuel in the tank, and the pressure of the ullage space within the fuel tank both decrease over the time period. The volume of fuel within the fuel tank is expected to decrease at a known rate during the cruise phase of a flight, when the ambient atmospheric pressure is substantially constant, as the fuel is consumed by the aircraft main engines. Should both the volume of fuel and pressure of the ullage space decrease during the cruise phase of the flight this may indicate a blockage in the vent as the ambient air pressure will remain substantially constant when the aircraft is in steady level flight. Determining the vent blockage in flight may enable mitigating measures to be put in place, such as the opening of redundant vent paths or the movement of fuel between fuel tanks, before any passive fail-safe mitigations of the fuel system become activated.

The aircraft fuel tank monitoring system may further comprise at least one third sensor for sensing a pressure of an ullage space above fuel in another fuel tank. The processor may be configured to monitor the change in the pressure of the ullage spaces within the respective fuel tanks, wherein the ullage spaces are coupled by a cross vent line. The processor may be configured to determine a fault if a pressure difference between the ullage spaces of the respective fuel tanks exceeds a threshold. Ullage spaces may be connected to allow the flow of ullage gases therebetween to equalise pressure within each ullage space. The cross vent line may reduce the number of vent paths between the ullage spaces and a vent open to the ambient atmosphere. If an ullage pressure differential occurs between the respective fuel tanks coupled by a cross vent line, then a blockage in the ross vent line may be determined. Determining the cross vent line blockage in flight may enable mitigating measures to be put in place, such as the opening of redundant vent paths or the movement of fuel between fuel tanks, before any passive fail-safe mitigations of the fuel system become activated.

The ullage spaces may be fluidly coupled to ambient via one or more vents. The processor may be configured to monitor the pressure changes and to determine a fault if a blockage in the one or more vents or in a vent line between the ullage space and the vent or in a cross vent line is deduced from the monitored pressure changes exceeding normal operating conditions. Ullage spaces may be coupled to ambient to allow for the venting of ullage gasses to or from ambient to adjust pressure within the ullage space. A block in any vents or vent lines connecting ullage spaces to ambient may inhibit this ability. Determining the vent blockage in flight may enable mitigating measures to be put in place, such as the opening of redundant vent paths or the movement of fuel between fuel tanks, before any passive fail-safe mitigations of the fuel system become activated.

The cross vent line may have an isolator to prevent fluid transfer along the cross vent line during normal operating conditions. The processor may be configured to determine a fault when the isolator has permitted fluid transfer along the vent line during abnormal operating conditions based on the change in the pressure of the ullage spaces within the respective fuel tanks over the time period. An isolator may be used to isolate or divert pressure within the system, and as such once actuated will result in a change in pressure of the first and/or second fuel tanks. Using this change in pressure to determine when the isolator has been actuated allows the system to determine actuation of the isolator during flight.

The sensors may be part of a fuel level monitoring system for determining a level of fuel within the fuel tank. The sensors may therefore serve a dual purpose of monitoring fuel level and monitoring health of the fuel tank system. Utilising the same sensors for both applications may reduce complexity, weight and cost of the systems.

The sensors may each be configured to sense absolute pressure. Using absolute pressure over gauge pressure may account for changes in ambient atmospheric pressure during the time period. Of course, the processor may have as a further input the ambient atmospheric pressure as this may be used in the monitoring of pressure changes over the time period.

The system may be configured to create an alert if the processor determines a fault. The alert may notify an aircraft operator, e.g. a pilot, co-pilot, ground crew, airline, manufacturer, that a fault has been determined, or may be used to trigger further aircraft systems to deal with or mitigate the fault.

The system may be configured to operate one or more valves for isolating or diverting pressure within one or more fuel tanks if the processor determines a fault. Such valves may be used to release pressure from the fuel tank system in the event that it becomes over-pressurised to avoid potential activation of a fail-safe device.

A further aspect of the invention provides a method of monitoring an aircraft fuel tank according to claim 9.

The ullage space is fluidly coupled to ambient via a vent. The method may further comprise monitoring the pressure changes and determining a fault if a blockage in the vent or in a vent line between the ullage space and the vent is deduced from the monitored pressure changes exceeding normal operating conditions.

The fuel tank may be fluidly coupled to a surge tank. The method may further comprise monitoring the pressure changes and determining a fault if an imminent overspill from the fuel tank to the surge tank is deduced from the monitored pressure changes exceeding normal operating conditions.

The ullage space may be coupled to ambient via a pressure relieving system. The method may further comprise monitoring the pressure changes and determining a fault if a failure or activation in the pressure relieving system is deduced from the monitored pressure changes. For example, the pressure relieving system may be a passive system and correct operation of the pressure relieving system to bring the pressure back into a normal operating range may be indicated as a failure of some other part of the fuel system that caused the pressure relieving system to activate as intended. Alternatively, an absence of operation of the pressure relieving system to bring the pressure back into a normal operating range may be indicated as a secondary failure of part of the fuel system.

The method of monitoring an aircraft fuel tank further comprises determining a fault if both the pressure of the fuel within the fuel tank and the pressure of the ullage space within the fuel tank increase over the time period.

The method of monitoring an aircraft fuel tank may further comprise calculating a change in a volume of the fuel within the fuel tank based on the sensed pressure of fuel, and determining a fault if both the volume of the fuel within the fuel tank and the pressure of the ullage space within the fuel tank decrease over the time period.

The method of monitoring an aircraft fuel tank may further comprise sensing a pressure of an ullage space above fuel in another fuel tank, monitoring the change in the pressure of the ullage spaces within the respective fuel tanks, wherein the ullage spaces are coupled by a cross vent line, and determining a fault if a pressure difference between the ullage spaces of the respective fuel tanks exceeds a threshold.

The ullage spaces may be fluidly coupled to ambient via one or more vents. The method may further comprise monitoring the pressure changes and determining a fault if a blockage in the one or more vents or in a vent line between the ullage space and the vent or in the cross vent line is deduced from the monitored pressure changes exceeding normal operating conditions.

The processor may include a plurality of different monitoring algorithms which could be hosted on-board in the aircraft fuel system 'built in test' BITE function or control software. Alternatively, the data could be used to drive offboard monitoring algorithms to log abnormal behaviour and trigger maintenance interventions (e.g. inspection or replacement of vent components). Algorithms could detect behaviour against predetermined thresholds or be more dynamic in nature (self learning) - detecting 'abnormal' data points - which may be more suited to off board maintenance. Abnormal behaviour in the data could be things like pressure spikes, above average pressure for a set of given input conditions or erratic pressure readings.

The cross vent line may have an isolator to prevent fluid transfer along the vent line during normal operating conditions. The method may further comprise determining a fault when the isolator has permitted fluid transfer along the vent line during abnormal operating conditions based on the change in the pressure of the ullage spaces within the respective fuel tanks over the time period.

The method of monitoring an aircraft fuel tank may further comprise using pressure sensors of a fuel level monitoring system used to determine a level of fuel within one or more fuel tanks in the method to sense the pressure of fuel within one or more fuel tanks and to sense the pressure of the ullage space above the fuel within the one or more fuel tanks.

The method of monitoring an aircraft fuel tank may further comprise creating an alert if a fault is determined.

The method of monitoring an aircraft fuel tank may further comprise operating one or more valves for isolating or diverting pressure within one or more fuel tanks if a fault is determined.

### BRIEF DESCRIPTION OF THE DRAWINGS

Embodiments of the invention will now be described with reference to the accompanying drawings, in which:
Figure 1 shows an example of an aircraft;
Figure 2 shows an example of an aircraft wing;
Figure 3 shows schematically a first embodiment according to the invention;
Figure 4 shows schematically a first configuration according to the first embodiment of the invention;
Figure 5 shows fuel and ullage pressures during cruising:
Figure 6 shows fuel volume and ullage pressures during descent:
Figure 7 shows schematically a second configuration according to the first embodiment of the invention;
Figure 8 shows fuel and ullage pressures during climbing:
Figure 9 shows schematically a third configuration according to the first embodiment of the invention;
Figure 10 shows fuel and ullage pressures during refuelling or fuel cross transfer:
Figure 11 shows fuel and ullage pressures during refuelling or fuel cross transfer:
Figure 12 shows schematically a second embodiment of the invention; and
Figure 13A shows fuel and ullage pressures of a first fuel tank during cruising:

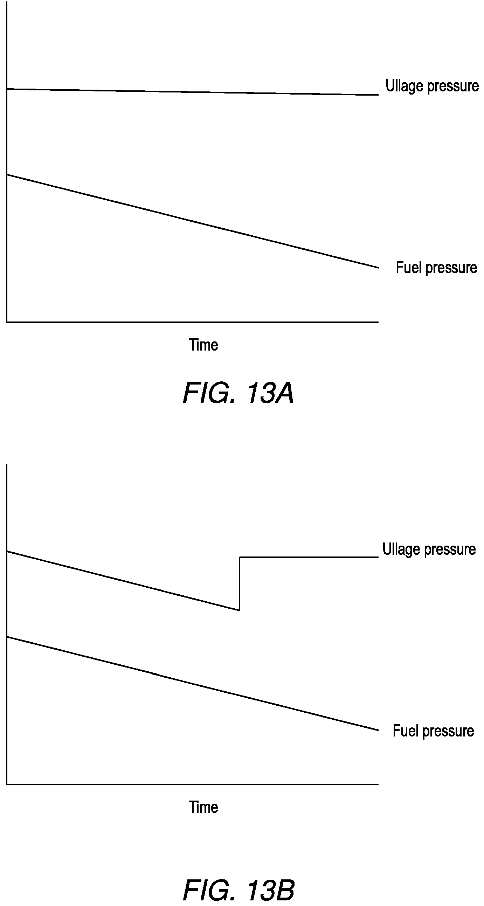

Figure 13A shows fuel and ullage pressures of a second fuel tank during cruising:

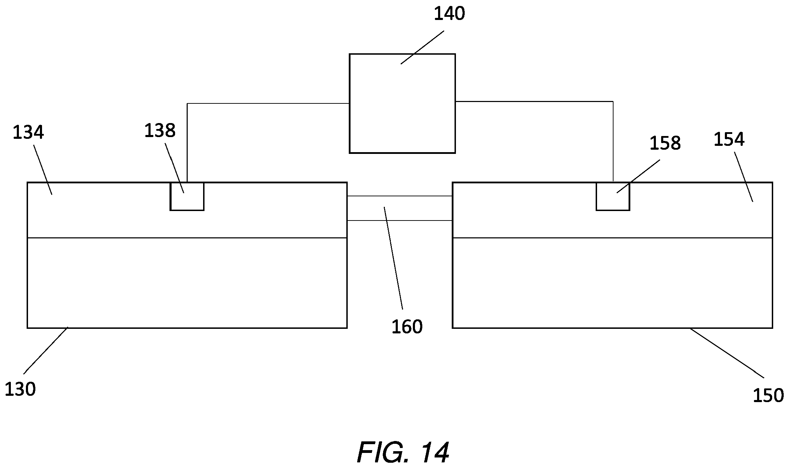

Figure 14 shows schematically second embodiment of the invention;

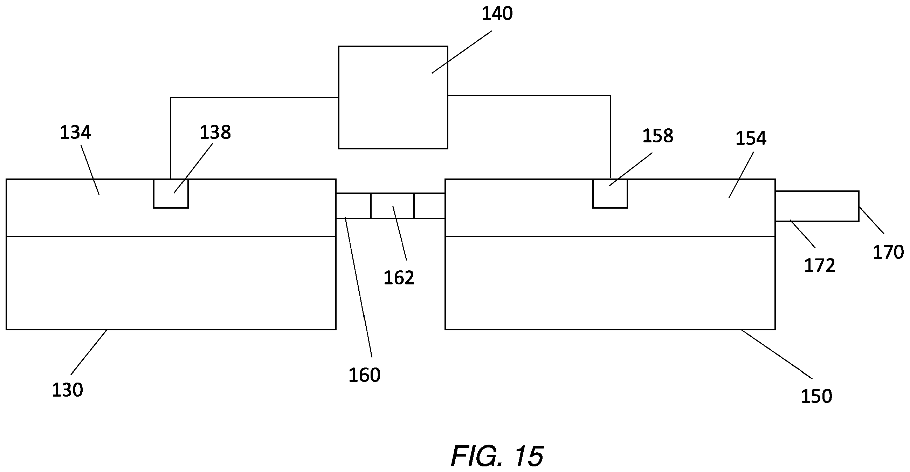

Figure 15 shows a first configuration according to the second embodiment of the invention; and

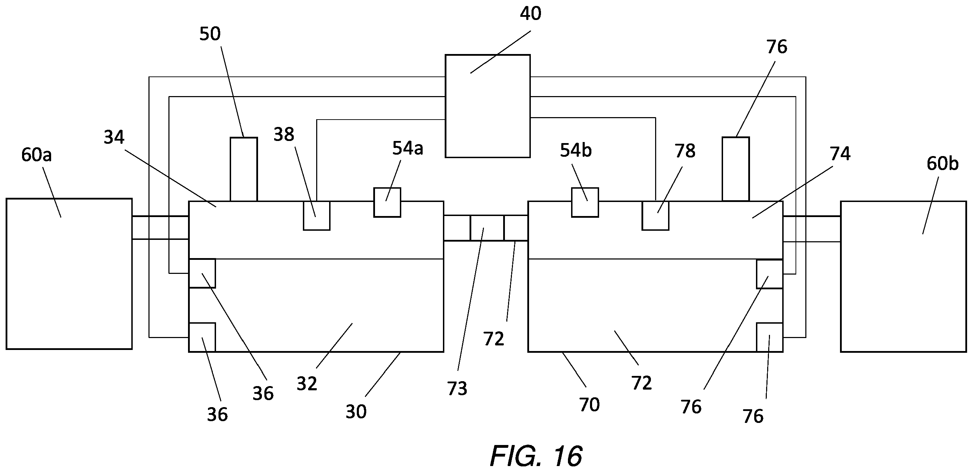

Figure 16 shows schematically the invention integrated with a fuel level monitoring system.

### DETAILED DESCRIPTION OF EMBODIMENT(S)

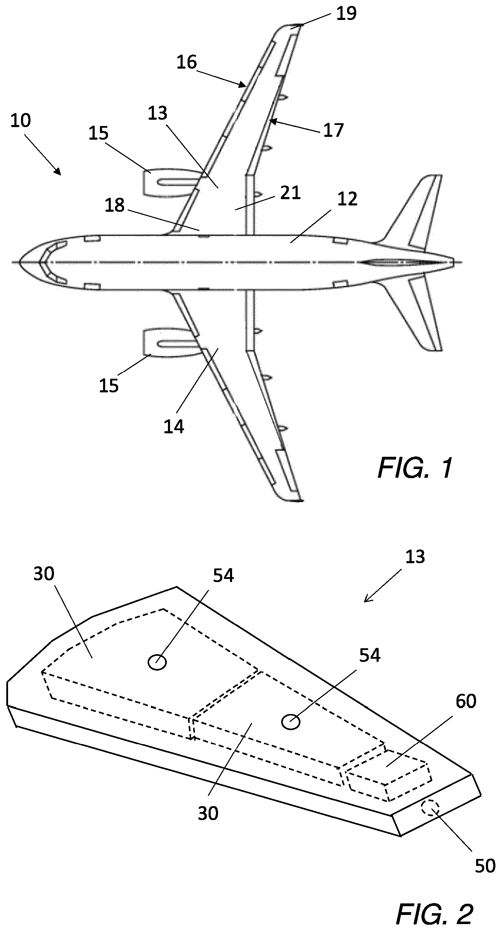

Figure 1 shows an aircraft 10. The aircraft 10 has a fuselage 12, and starboard and port fixed wings 13, 14. An engine 15 is mounted to each wing 13, 14. The aircraft 10 is a typical jet passenger transport aircraft but the invention is applicable to a wide variety of fixed wing aircraft types, including commercial, military, passenger, cargo, jet, propeller, general aviation, etc. with any number of engines attached to the wings or fuselage.

Each wing has a cantilevered wing structure with a length extending in a spanwise direction from a root 18 to a tip 19, with the root 18 being joined to the aircraft fuselage 12. The wings 13, 14 are similar in construction and so only the starboard wing 13 will be described in detail. The wing 13 has a leading edge 16 and a trailing edge 17. The leading edge 16 is at the forward end of the wing and the trailing edge 17 is at the rearward end of the wing.

The wing has upper wing covers 21 and lower wing covers (not shown) and leading and trailing edge cover panels (collectively the "wing covers"), which form part of the outer aerodynamic surface of the wing. The wing 13 has an upper aerodynamic surface between the leading and trailing edges 16, 17 and a lower aerodynamic surface between the leading and trailing edges of the wing.

The wing 13 has a spanwise axis S which extends in a direction from the wing root 18 to the wing tip 19, and a chordwise axis which extends in the direction from the leading edge 16 to the trailing edge 17. The wing 13 has an aerofoil cross section. The wing 13 has a thickness direction perpendicular to the chordwise and spanwise directions.

Each wing 13 houses at least one fuel tank 30 as shown in Figure 2 for storing the fuel for feeding to the engines 15 as part of a fuel system of the aircraft. Multiple fuel tanks 30 may be connected using cross vent lines (not shown), each of which may comprise a pressure relief system and/or pressure isolating systems. Each fuel tank 30 may comprise a pressure relief apparatus 54 for venting the fuel tank 30 to ambient. This may be a fail-safe mechanism, the pressure relief system 54 triggered in the event that the pressure within the fuel tank 30 exceeds design limits. Each fuel tank 30 may be fluidly coupled to a surge tank 60 also housed within the wing 13 - each fuel tank 30 may be coupled directly to the surge tank 60; each fuel tank 30 may be coupled to a subsequent fuel tank 30 which is in turn coupled to the surge tank 60; or any combination of connections thereof. The surge tank 60 is arranged to contain fuel should the volume of fuel within a fuel tank 30 exceed a predetermined threshold, for example if the fuel tank 30 is overfilled during refuelling of the aircraft 10 or during fuel transfer between tanks during flight, or as pressure changes occur which may cause fuel to spill over from the fuel tank 30 into the surge tank 60.

The wing 13 may further comprise at least one vent 50 fluidly connected to the fuel tanks 30. The vents 50 may be positioned in the wing covers 21, optionally on the underside of the wing (not shown) and each vent 50 may be a NACA vent. Each fuel tank 30 may be connected to a separate vent 50, or multiple fuel tanks 30 may be connected to the same vent 50 using shared vent lines (not shown). A single fuel tank 30 may be configured to connect to multiple vents 50, optionally wherein the connection between a fuel tank 30 and a vent 50 is controlled by a pressure relief system and/or a pressure isolating system.

Each fuel tank 30 contains a volume of fuel 32 and an ullage space 34 which may comprise a mix of air and fuel vapours or may be filled with an inert gas. Pressure sensors may be used to determine the volume of fuel in a fuel tank 30, for example by using a first pressure sensor 36 to measure the pressure (head) of the fuel 32 and a second pressure sensor 38 arranged to measure the pressure in the ullage space 34, the two sensors 36, 38 spaced apart by a known distance. Each fuel tank 30 may comprise multiple pairs of sensors 36, 38 arranged at different positions along the span of the wing 13 to monitor the pressures within the fuel tank 30 in multiple positions.

Using these measurements along with known data such as the geometry of the fuel tank 30 and positions of the sensors the volume of fuel 32 within the fuel tank 30 can be determined. Such pressure based gauging systems may also be used to monitor the condition of fuel tanks and vents connected thereto. Vents or vent lines may become partially or fully blocked by FOD and/or by ice build up when flying at high altitude.

Current methods of monitoring the condition of vent systems comprise manual checks of the vents and vent lines for blockages once the aircraft is on the ground, and manual checks of any pressure relieving systems to establish retrospectively whether they have been activated during the preceding flight.

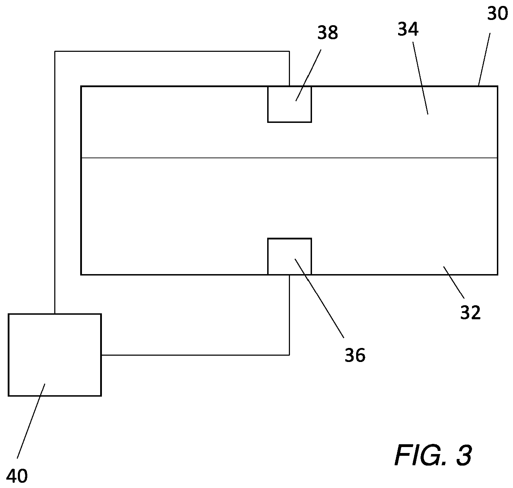

In a first embodiment illustrated schematically by Figure 3, there is provided an aircraft fuel tank monitoring system comprising at least one first sensor 36 arranged to measure the pressure of the fuel 32 within a fuel tank 30. The at least one first sensor 36 may be at least partially submerged in the fuel 32 (e.g. a liquid fuel) in the fuel tank 30. The system further comprises at least one second sensor 38 arranged to measure the pressure of an ullage space 34 above the fuel 32 within the fuel tank 30. Any reference to first sensor 36 or second sensor 38 made hereinafter may apply to a plurality of first sensors or a plurality of second sensors respectively. The first sensor 36 and/or second sensor 38 may each be an optical sensor. The first sensor 36 and second sensor 38 are connected to a processor 40 that is used to monitor the change in pressure (head) of the fuel 32 within the fuel tank 30 and the pressure within the ullage space 34 over a time period. This data is then used to determine whether a fault is present in the fuel system by comparing the data to the pressure changes expected under normal operating conditions.

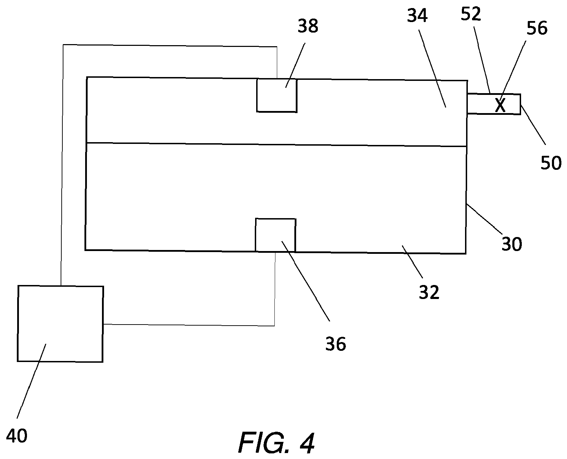

The space 34 of the fuel tank 30 is fluidly coupled to ambient via a vent 50 as illustrated schematically in Figure 4, optionally wherein the vent 50 is connected to the ullage space 34 using a vent line 52 which may comprise a pipe. The processor 40 may be configured to monitor the pressure changes in the fuel 32 and ullage space 34 and, based on the monitored pressure changes exceeding normal operating conditions, to determine a fault if a blockage in the vent 50 and/or in the vent line 52 is deduced.

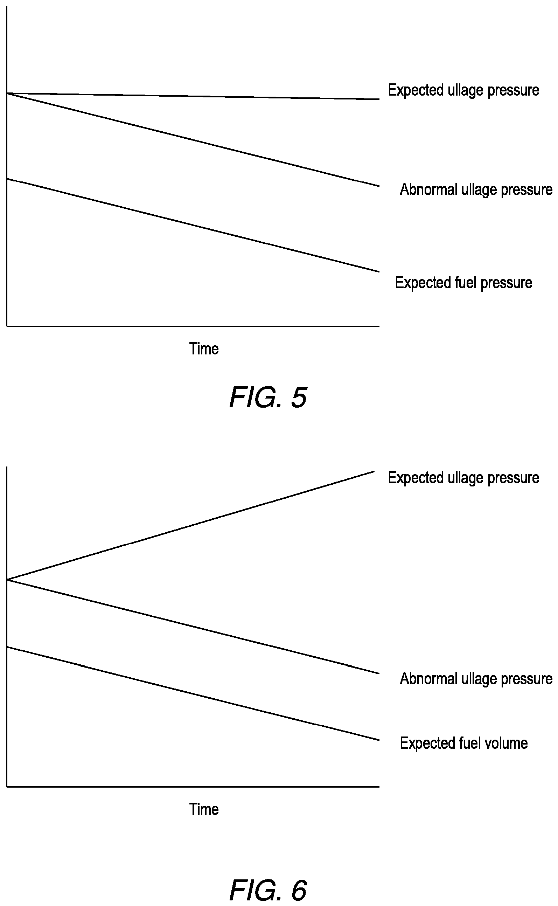

By way of non-limiting example, the expected changes in fuel and ullage pressures over a period of time during cruise flight are considered. Under normal operating conditions, fuel pressure is expected to decrease at a steady rate as fuel 32 is supplied to the engine 15 over a prolonged time period, as shown in Figure 5. With the ullage space 34 fluidly coupled to ambient, pressure in the ullage space 34 is expected to remain steady and be substantially equal to or at an offset from the ambient pressure which remains substantially constant when cruising at a set altitude. Therefore, when cruising at a constant altitude ullage pressure is expected to be maintained at a constant pressure for an open vented fuel system. However, should the vent 50 or vent line 52 become blocked as illustrated by the blockage 56 in Figure 4, the ullage pressure may decrease as the volume of the ullage space 34 increases in response to the volume of fuel 32 in the fuel tank 30 decreasing. This deviation in the change in ullage pressure may be detected by the processor 40 and a fault determined.

The processor 40 may be further configured to calculate a change in volume of the fuel 32 within the fuel tank 30 based on measurements made by the at least one first sensor 36. This data may then also be used to determine whether a fault has occurred. By way of non-limiting example, the expected changes in pressure of the fuel 32 and ullage space 34 of a fuel tank 30 during descent of an aircraft 10 are considered and illustrated by Figure 6. The volume of fuel 32 is expected to decrease at a steady rate during descent as fuel 32 is supplied to the engine 15. As the aircraft 10 descends, the ambient pressure will increase as altitude decreases. As such the pressure in an ullage space 34 vented to ambient is expected to increase according to the increase in ambient pressure. However, if a blockage 56 prevents the ullage space 34 from venting to ambient, the ullage pressure will deviate from that expected during descent. As shown in Figure 6, the decrease in volume of fuel 32 within the fuel tank 30 will increase the volume of the ullage space 34 which, if the vent is blocked, will cause a reduction in the ullage pressure. The processor 40 may therefore be configured to determine a fault if both the volume of the fuel 32 and the pressure of the ullage space 34 decrease over the monitored time period.

The processor may include a plurality of different monitoring algorithms which could be hosted on-board in the aircraft fuel system 'built in test' BITE function or control software. Alternatively, the data could be used to drive offboard monitoring algorithms to log abnormal behaviour and trigger maintenance interventions (e.g. inspection or replacement of vent components). Algorithms could detect behaviour against predetermined thresholds or be more dynamic in nature (self learning) - detecting 'abnormal' data points - which may be more suited to off board maintenance. Abnormal behaviour in the data could be things like pressure spikes, above average pressure for a set of given input conditions or erratic pressure readings.

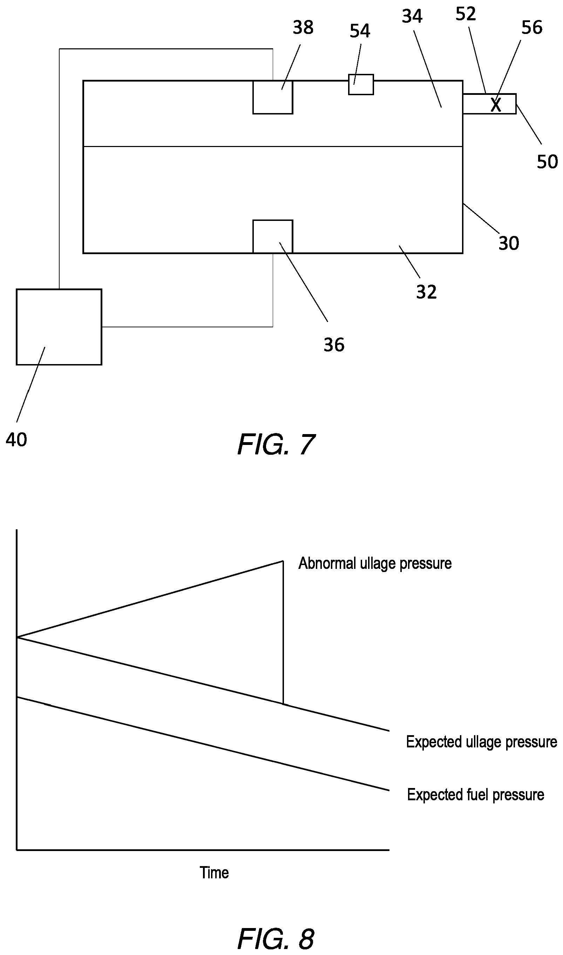

The ullage space 34 may further be fluidly connected to ambient by a pressure relieving system 54 as shown in Figure 7. The pressure relieving system 54 may comprise a normally closed valve which opens once pressure exerted on the system exceeds a predetermined threshold value. The valve may be a two-way valve to open in both over- and under-pressure fuel tank scenarios. The valve may be a passive valve. The valve may be a single use valve, requiring replacement once it has activated. Alternatively, the pressure relieving system 54 may be incorporated within a vent line 52 and/or may comprise an active valve operable by the processor 40. The processor 40 may be configured to monitor the pressure changes in the fuel 32 and ullage space 34 and, based on the monitored pressure changes exceeding normal operating conditions, to determine a fault if a failure or activation in the pressure relieving system 54 is deduced.

By way of non-limiting example, the expected changes in fuel and ullage pressures whilst an aircraft 10 is in the climb are considered. In this case the ullage space 34 is further fluidly coupled to ambient via a vent 50 as shown in Figure 7. During the climb phase of a flight the fuel pressure is expected to decrease as fuel 32 is supplied to the engine 15 as shown in Figure 8. With the ullage space 34 fluidly coupled to ambient via an open vent, pressure in the ullage space 34 is expected to be substantially equal to or offset from ambient atmospheric pressure, therefore when the aircraft is climbing the ullage pressure is expected to decrease as ambient pressure decreases with increasing altitude. However, should the vent 50 become blocked by a blockage 56, ullage pressure may increase as shown in Figure 8. If the pressure difference between an expected and an actual ullage pressure exceeds a threshold then the processor 40 may be configured to determine a fault.

Above a second predetermined threshold, the pressure in the ullage space 34 may actuate the pressure relief system 54 such that the fuel tank 30 may vent to ambient via the pressure relief system 54, bypassing the vent having the vent blockage. This point is illustrated in Figure 8 by the sharp reduction in abnormal ullage pressure back to the levels of the expected ullage pressure. The processor 40 may therefore be configured to determine a second fault based on the monitored ullage pressure exceeding normal operating conditions. The second fault is indicative that the pressure relieving system has activated to prevent any structural damage to the fuel tank 30 due to the abnormal pressure experienced. Since the activation of the pressure relieving system is intended to occur at a certain over- or under- pressure situation the 'fault' is indicative of correct operation (rather than a failure) of the pressure relieving system but since the pressure relieving system in this example is a fail-safe backup that is not activated under normal aircraft operating conditions, the fault is nevertheless registered. Should the pressure relieving system not activate when it should, or activate at a pressure outside of design limits, then the processor 40 may indicate a second fault in the pressure relieving system corresponding to a failure of the pressure relieving system.

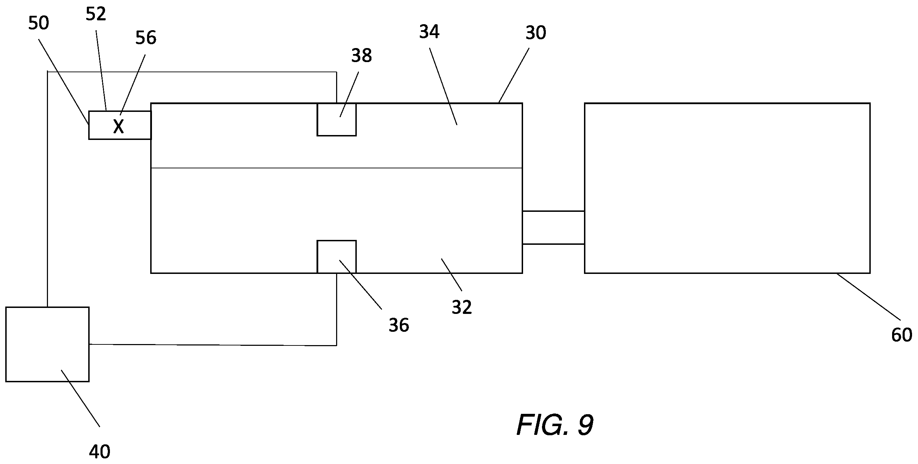

In a second configuration, the fuel tank 30 may be fluidly coupled to a surge tank 60 as illustrated in Figure 9. Surge tanks 60 are configured to contain fuel 32 overspill from the fuel tank 30 in the event that the volume of fuel 32 within the fuel tank 30 exceeds a predetermined threshold value, for example during refuelling of the aircraft 10 or during fuel transfer between tanks, or when pressure changes occur in over full fuel tanks 30 causing fuel to pass along a vent line. The processor 40 may be configured to monitor the pressure changes in the fuel 32 and ullage space 34 and, based on the monitored pressure changes exceeding normal operating conditions, to determine a fault if an imminent overspill from the fuel tank 30 to the surge tank 60 is deduced.

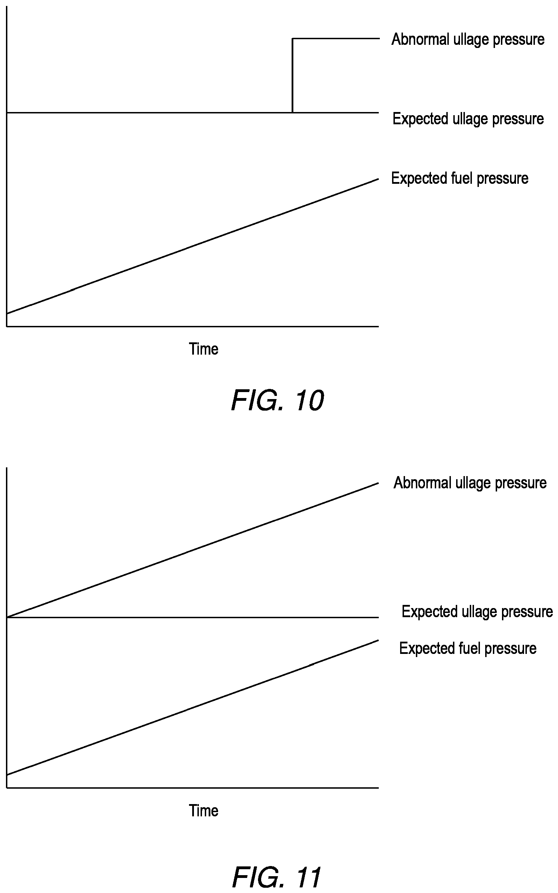

By way of non-limiting example, the expected changes in fuel and ullage pressures whilst the aircraft 10 is being refuelled, or during fuel transfer between tanks, are considered. In this case the ullage space 34 is fluidly coupled to ambient via a vent. As fuel 32 is pumped into the fuel tank 30, the pressure of the fuel 32 within the fuel tank 30 will increase as shown in Figure 10. With the ullage space 34 fluidly coupled to ambient, pressure in the ullage space 34 is expected to be equal to ambient pressure, therefore with the aircraft 10 on the ground for refuelling, or when the aircraft is in cruise flight for fuel cross transfer, the ullage pressure is expected to remain substantially constant. Overspill from the fuel tank 30 may occur when the fuel tank 30 is filled with fuel 32 such that there is no ullage space 34. Once this occurs, the at least one second sensor 38 may sense a rapid increase in pressure as the gases in the ullage space 34 are replaced with liquid fuel 32. This outcome is shown in Figure 10 by the sharp increase in abnormal ullage pressure line, which the processor 40 may use to determine an imminent overspill.

A different potential fault during refuelling or fuel cross transfer of the aircraft 10 is illustrated by Figure 11. Again, as fuel 32 is pumped into the fuel tank 30, the pressure of the fuel 32 within the fuel tank 30 will increase, whilst the ullage pressure in an ullage space 34 fluidly connected to ambient is expected to remain at a constant level, equal to ambient pressure. However, if the vent 50 or vent line 52 is blocked by a blockage 56 as shown in Figure 8, the ullage space 34 may be unable to vent to ambient. As such, as the fuel tank 30 is filled with fuel 32 the volume of the ullage space 34 will decrease and hence the ullage pressure will increase as illustrated by Figure 11. The processor 40 is therefore configured to determine a fault if both the pressure of the fuel 32 within the fuel tank 30 and the pressure of the ullage space 34 increase over the monitored time period.

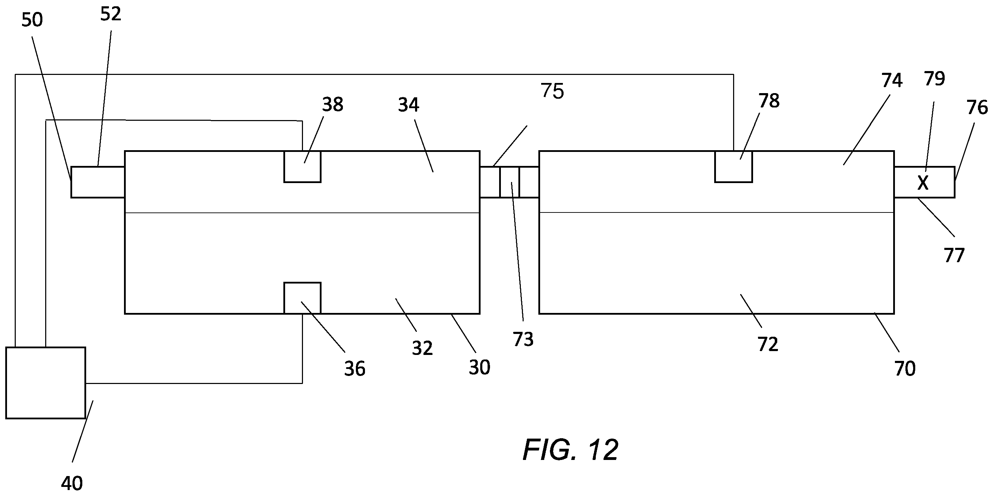

In a third configuration, the fuel tank system may comprise a second fuel tank 70, wherein the ullage space 34 of the first fuel tank 30 is fluidly connected to the ullage space 74 of the second fuel tank 70 using a cross vent line 75 as illustrated in Figure 12, optionally wherein the cross vent line 75 comprises a cross vent pressure isolation system 73. The first fuel tank 30 and the second fuel tank 70 may optionally be housed in separate wings of the aircraft. The cross vent pressure isolation system 73 may prevent fluid flow between the first ullage space 34 and the second ullage space 74 during normal conditions. The second fuel tank 70 comprises at least one third sensor 78 arranged to measure the pressure of the ullage space 74 in the second fuel tank 70. The processor 40 may be configured to monitor the pressure changes in the ullage spaces 34, 74 in the first and second fuel tanks 30, 70 and, based on the difference in pressure between the first and second fuel tanks 30, 70 exceeding a threshold, to determine if there is a fault in the fuel tank system. The ullage spaces 34, 74 may each be fluidly coupled to ambient by at least one vent 50, 76 respectively, optionally wherein either or both of the ullage spaces 34, 74 are connected to the at least one vent 50, 76 using at least one further vent line 52, 77.

By way of non-limiting example, the expected changes in the fuel and ullage pressures in the first fuel tank 30 and the second fuel tank 70 during cruise are considered. In this case both the first and second ullage spaces 34, 74 are fluidly coupled to ambient via vents 50, 76, and the two fuel tanks 30, 70 are fluidly connected by a cross vent line 75 which comprises a cross vent pressure isolation apparatus 73 that is closed to prevent flow between the fuel tanks 30, 70 during normal operation. Figure 13A shows the fuel pressure and ullage pressure in the first fuel tank 30 changing as expected, the fuel pressure decreasing at a steady rate as fuel 32 is supplied to an engine 15, and the ullage pressure remaining at a constant value equal to the ambient pressure. Figure 13B shows the fuel pressure and ullage pressure in the second fuel tank 70 over the same period. The fuel pressure again decreases at a steady rate as expected as fuel 72 is supplied to an engine 15. The first fuel tank 30 and second fuel tank 70 may each supply fuel 32, 72 to a different engine 15. In this case, a blockage 79 prevents the second fuel tank 70 from venting to ambient as shown in Figure 12. As such the ullage pressure decreases at a steady rate as the volume of fuel 72 within the second fuel tank 70 decreases. The processor 40 may be configured to detect the pressure change in the second ullage space 74 deviating from that expected during normal conditions, optionally the processor 40 may monitor the difference in pressure between the first ullage space 34 and the second ullage space 74 and determine a fault once this difference exceeds a threshold. **In** the example illustrated in Figures 13A and 13B, the cross vent pressure isolation system 73 is actuated to allow fluid flow between the first fuel tank 30 and the second fuel tank 70, thereby allowing the second fuel tank 70 to vent to ambient via the first vent 50. As such a sharp increase in the second ullage pressure is observed in Figure 13B at the point of actuation of the cross vent pressure isolation system 73, before the second ullage pressure stabilises at ambient pressure. Should the first fuel tank 30 and second fuel tank 70 be housed in different wings of the aircraft, the processor may be configured to determine where in the system a fault has occurred.

The fuel tank system may be arranged in any combination of the above configurations.

**In** a further embodiment of the invention, there is provided an aircraft fuel tank monitoring system comprising a first fuel tank 130 having a first ullage space 134, the first fuel tank 130 comprising at least one first sensor 138 for sensing the pressure in the first ullage space 134. The system further comprises a second fuel tank 150 having a second ullage space 154, the second fuel tank 150 comprising at least one second sensor 158 for sensing the pressure within the second ullage space 154. The first ullage space 134 and the second ullage space 154 are fluidly coupled by a cross vent line 160 as illustrated schematically in Figure 14. A processor 140 is also provided for monitoring the changes in pressure in each of the first ullage space 134 and the second ullage space 154 over a period of time, and for determining the presence of a fault in the fuel tank system if the pressure difference between the first ullage space 134 and the second ullage space 154 exceeds a threshold. The threshold may be predetermined based upon normal operating conditions.

The ullage spaces 134, 154 may be fluidly coupled to ambient via at least one vent 170 as illustrated schematically in Figure 15, optionally wherein the at least one vent 170 is connected to either or both of the ullage spaces 134, 154 using a vent line 172 which may comprise a pipe. The processor 140 may be configured to monitor the pressure changes in the first ullage space 134 and the second ullage space 154 and, based on the monitored pressure changes exceeding normal operating conditions, to determine a fault if a blockage in the at least one vent 170 and/or in the vent line 172 is deduced.

The cross vent line 160 connecting the first ullage space and the second ullage space may comprise an isolator 162 to prevent fluid transfer along the cross vent line 160 during normal operating conditions. The isolator 162 may comprise a two-way valve. The processor 140 may be configured to monitor the change in pressure in the first ullage space 134 and the second ullage space 154 and, based on this, to determine a fault when the isolator 162 has permitted fluid transfer along the cross vent line 160 during abnormal operating conditions. Actuation of the isolator 162 may be indicated by for example a rapid change in pressure of one of the first ullage space 134 or second ullage space 174.

The sensors of any previously described embodiment may also be used as part of a different system on the aircraft, preferably wherein they are part of a fuel level monitoring system for determining a level of fuel within the fuel tank system. An example of a fuel level monitoring system is shown schematically in Figure 16. The system may comprise a plurality of fuel tanks 30, 70 fluidly connected by a cross vent line 72 comprising a pressure isolation system 73 configured to prevent fluid flow during normal operating conditions. Each fuel tank 30, 70 may vent to ambient via a vent 50, 76 respectively and each may be connected to a surge tank 60a, 60b. A pressure relief system 54a, 54b is located in each of the fuel tanks 30, 70 respectively which may be actuated to allow the fuel tank to vent to ambient. Each fuel tank 30, 70 comprises a plurality of first pressure sensors 36, 76 submerged beneath the fuel 32, 72 in the tank to sense the pressure within the fuel 32, 72 and at least one second sensor 38, 78 to sense the pressure within the ullage space 34, 74 of each tank. The first and second sensors 36, 38, 76, 78 together may form the fuel level monitoring system. A processor 40 is provided to use data from each of the first and second sensors 36, 38, 76, 78 to determine any faults in the fuel tank system.

The level of fuel may be determined based on the volume of fuel within a fuel tank following the method described previously. Each of the pressure sensors 36, 38, 76, 78 may be configured to sense the absolute pressure of the fuel and/or ullage space, such that any variations in ambient pressure are accounted for.

Should the processor of any previously defined monitoring system determine a fault within the fuel tank system, it may be configured to create an alert. The alert may be visual and/or auditory, and may be used to alert further aircraft systems. The monitoring system may further be configured to operate one or more valves for isolating or diverting pressure within at least one fuel tank should the system processor determine a fault. Such valves may form part of the fuel tank monitoring system such as the isolator 162 described previously, or may be part of a separate aircraft system.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft (10), comprising a fuel tank (30), the fuel tank comprising an ullage space (34), the ullage space being fluidly coupled to the ambient atmosphere external to the aircraft (10) via a vent (50), the aircraft further comprising a fuel tank monitoring system, the monitoring system comprising:
at least one first sensor (36) for sensing a pressure of fuel (32) within the fuel tank (30);
at least one second sensor (38) for sensing a pressure of the ullage space (34) above the fuel (32) within the fuel tank;
**characterized in that** the monitoring system further comprises
a processor (40) for monitoring the change in the pressure of the fuel within the fuel tank (30) over a time period and for monitoring the change in the pressure of the ullage space (34) within the fuel tank over the time period, and to determine a fault if both the pressure of the fuel within the fuel tank (32) and the pressure of the ullage space (34) within the fuel tank (32) increase over the time period, as fuel is pumped into the fuel tank (30).

2. An aircraft (10) according to claim 1, wherein the processor (40) is configured to monitor the pressure changes and to determine a fault if a blockage in the vent (50) or in a vent line (52) between the ullage space (34) and the vent (50) is deduced from the increased pressure of the ullage space (34).

3. An aircraft (10) according to claim 1 or claim 2, wherein the fuel tank (30) is fluidly coupled to a surge tank (60), and the processor (40) is configured to monitor the pressure changes and to determine a fault if an imminent overspill from the fuel tank (30) to the surge tank (60) is deduced from the monitored pressure changes exceeding normal operating conditions.

4. An aircraft (10) according to any preceding claim, wherein the ullage space (34) is coupled to ambient via a pressure relieving system (54), and the processor (40) is configured to monitor the pressure changes and to determine a fault if a failure or activation in the pressure relieving system (54) is deduced from the monitored pressure changes.

5. An aircraft (10) according to any preceding claim, wherein the processor (40) is configured to calculate a change in a volume of the fuel (32) within the fuel tank (30) based on the first sensor (36), and wherein the processor (40) is configured to determine a fault if both the volume of the fuel (32) within the fuel tank (30) and the pressure of the ullage space (34) within the fuel tank (30) decrease over the time period.

6. An aircraft (10) according to any preceding claim, further comprising at least one third sensor (78) for sensing a pressure of an ullage space (74) above fuel (72) in another fuel tank (70), wherein the processor (40) is configured to monitor the change in the pressure of the ullage spaces (34, 74) within the respective fuel tanks (30, 70), wherein the ullage spaces (34, 74) are coupled by a cross vent line (75), and wherein the processor (40) is configured to determine a fault if a pressure difference between the ullage spaces (34, 74) of the respective fuel tanks (30, 70) exceeds a threshold.

7. An aircraft (10) according to claim 6, wherein the ullage spaces (34, 74) are fluidly coupled to ambient via one or more vents (50) and the processor (40) is configured to monitor the pressure changes and to determine a fault if a blockage in the cross vent line (75) is deduced from the monitored pressure changes if an ullage pressure differential occurs between the respective fuel tanks (30, 70) coupled by the cross vent line (75).

8. An aircraft (10) according to any of claims 6 to 7, wherein the cross vent line (75) has an isolator (73) to prevent fluid transfer along the cross vent line (75) during normal operating conditions, and wherein the processor is configured to determine a fault when the isolator (73) has permitted fluid transfer along the cross vent line (75) during abnormal operating conditions based on a sharp change in the pressure of the ullage spaces (34, 74) within the respective fuel tanks (30, 70) over the time period.

9. A method of monitoring an aircraft fuel tank (30), comprising:
sensing a pressure of fuel (32) within a fuel tank (30);
sensing a pressure of an ullage space (34) above the fuel (32) within the fuel tank (30), wherein the ullage space (34) is fluidly coupled to ambient via a vent (50);
monitoring the change in the pressure of the fuel (32) within the fuel tank (30) over a time period and monitoring the change in the pressure of the ullage space (34) within the fuel tank (30) over the time period, and
determining a fault if both the pressure of the fuel within the fuel tank (30) and the pressure of the ullage space (34) within the fuel tank increase over the time period, as fuel (32) is pumped into the first fuel tank (30).

10. A method according to claim 9, wherein the method further comprises monitoring the pressure changes and determining a fault if a blockage in the vent (50) or in a vent line (52) between the ullage space (34) and the vent (50) is deduced from the increased pressure of the ullage space (34).

11. A method according to claim 9 or claim 10, wherein the fuel tank (30) is fluidly coupled to a surge tank (60), and the method further comprises monitoring the pressure changes and determining a fault if an imminent overspill from the fuel tank (30) to the surge tank (60) is deduced from the monitored pressure changes exceeding normal operating conditions.

12. A method according to any of claims 9 to 11, wherein the ullage space (34) is coupled to ambient via a pressure relieving system (54), and the method further comprises monitoring the pressure changes and determining a fault if a failure or activation in the pressure relieving system (54) is deduced from the monitored pressure changes.

13. A method according to any of claims 9 to 12, further comprising:
calculating a change in a volume of the fuel (32) within the fuel tank (30) based on the sensed pressure of fuel, and
determining a fault if both the volume of the fuel (32) within the fuel tank (30) and the pressure of the ullage space (34) within the fuel tank (30) decrease over the time period.

14. A method according to any of claims 9 to 13, further comprising:
sensing a pressure of an ullage space (74) above fuel (72) in another fuel tank (70), monitoring the change in the pressure of the ullage spaces (34, 74) within the respective fuel tanks (30, 70), wherein the ullage spaces (34, 74) are coupled by a cross vent line (75), and
determining a fault if a pressure difference between the ullage spaces (34, 74) of the respective fuel tanks (30, 70) exceeds a threshold.

15. A method according to claim 14, wherein the ullage spaces (34, 74) are fluidly coupled to ambient via one or more vents (50), and the method further comprises monitoring the pressure changes and determining a fault if a blockage in the cross vent line (75) is deduced from the monitored pressure changes if an ullage pressure differential occurs between the respective fuel tanks (30, 70) coupled by the cross vent line (75).

16. A method according to any of claims 14 to 15, wherein the cross vent line (75) has an isolator (73) to prevent fluid transfer along the cross vent line (75) during normal operating conditions, and the method further comprises determining a fault when the isolator (73) has permitted fluid transfer along the cross vent line (75) during abnormal operating conditions based on a sharp change in the pressure of the ullage spaces (34, 74) within the respective fuel tanks (30, 70) over the time period.

## Patentansprüche

1. Luftfahrzeug (10), das einen Kraftstofftank (30) umfasst, wobei der Kraftstofftank einen Tankleerraum (34) umfasst, wobei der Tankleerraum über eine Entlüftung (50) mit der Umgebungsatmosphäre außerhalb des Luftfahrzeugs (10) fluidisch gekoppelt ist, wobei das Luftfahrzeug ferner ein Kraftstofftanküberwachungssystem umfasst, wobei das Überwachungssystem Folgendes umfasst:
mindestens einen ersten Sensor (36) zum Erfassen eines Drucks von Kraftstoff (32) innerhalb des Kraftstofftanks (30);
mindestens einen zweiten Sensor (38) zum Erfassen eines Drucks des Tankleerraums (34) über dem Kraftstoff (32) innerhalb des Kraftstofftanks;
**dadurch gekennzeichnet, dass** das Überwachungssystem ferner einen Prozessor (40) zum Überwachen der Änderung des Drucks des Kraftstoffs innerhalb des Kraftstofftanks (30) während eines Zeitraums und zum Überwachen der Änderung des Drucks des Tankleerraums (34) innerhalb des Kraftstofftanks während des Zeitraums und zum Bestimmen eines Fehlers, wenn sich sowohl der Druck des Kraftstoffs innerhalb des Kraftstofftanks (32) als auch der Druck des Tankleerraums (34) innerhalb des Kraftstofftanks (32) während des Zeitraums erhöhen, während Kraftstoff in den Kraftstofftank (30) gepumpt wird, umfasst.

2. Luftfahrzeug (10) nach Anspruch 1, wobei der Prozessor (40) dazu ausgelegt ist, die Druckänderungen zu überwachen und einen Fehler zu bestimmen, wenn aus dem erhöhten Druck des Tankleerraums (34) eine Blockierung in der Entlüftung (50) oder in einer Entlüftungsleitung (52) zwischen dem Tankleerraum (34) und der Entlüftung (50) abgeleitet wird.

3. Luftfahrzeug (10) nach Anspruch 1 oder Anspruch 2, wobei der Kraftstofftank (30) mit einem Ausgleichstank (60) fluidisch gekoppelt ist und der Prozessor (40) dazu ausgelegt ist, die Druckänderungen zu überwachen und einen Fehler zu bestimmen, wenn aus den überwachten Druckänderungen, die über normale Betriebsbedingungen hinausgehen, ein bevorstehendes Überlaufen aus dem Kraftstofftank (30) in den Ausgleichstank (60) abgeleitet wird.

4. Luftfahrzeug (10) nach einem der vorhergehenden Ansprüche, wobei der Tankleerraum (34) über ein Druckentlastungssystem (54) mit der Umgebung gekoppelt ist und der Prozessor (40) dazu ausgelegt ist, die Druckänderungen zu überwachen und einen Fehler zu bestimmen, wenn aus den überwachten Druckänderungen eine Störung oder Aktivierung in dem Druckentlastungssystem (54) abgeleitet wird.

5. Luftfahrzeug (10) nach einem der vorhergehenden Ansprüche, wobei der Prozessor (40) dazu ausgelegt ist, eine Änderung eines Volumens des Kraftstoffs (32) innerhalb des Kraftstofftanks (30) auf der Basis des ersten Sensors (36) zu berechnen, und wobei der Prozessor (40) dazu ausgelegt ist, einen Fehler zu bestimmen, wenn sich sowohl das Volumen des Kraftstoffs (32) innerhalb des Kraftstofftanks (30) als auch der Druck des Tankleerraums (34) innerhalb des Kraftstofftanks (30) während des Zeitraums verringern.

6. Luftfahrzeug (10) nach einem der vorhergehenden Ansprüche, das ferner mindestens einen dritten Sensor (78) zum Erfassen eines Drucks eines Tankleerraums (74) über Kraftstoff (72) in einem anderen Kraftstofftank (70) umfasst, wobei der Prozessor (40) dazu ausgelegt ist, die Änderung des Drucks der Tankleerräume (34, 74) innerhalb der jeweiligen Kraftstofftanks (30, 70) zu überwachen, wobei die Tankleerräume (34, 74) durch eine Querentlüftungsleitung (75) gekoppelt sind, und wobei der Prozessor (40) dazu ausgelegt ist, einen Fehler zu bestimmen, wenn eine Druckdifferenz zwischen den Tankleerräumen (34, 74) der jeweiligen Kraftstofftanks (30, 70) über einen Schwellenwert hinausgeht.

7. Luftfahrzeug (10) nach Anspruch 6, wobei die Tankleerräume (34, 74) über eine oder mehrere Entlüftungen (50) mit der Umgebung fluidisch gekoppelt sind und der Prozessor (40) dazu ausgelegt ist, die Druckänderungen zu überwachen und einen Fehler zu bestimmen, wenn aus den überwachten Druckänderungen eine Blockierung in der Querentlüftungsleitung (75) abgeleitet wird, wenn eine Tankleerraum-Druckdifferenz zwischen den jeweiligen durch die Querentlüftungsleitung (75) gekoppelten Kraftstofftanks (30, 70) auftritt.

8. Luftfahrzeug (10) nach einem der Ansprüche 6 bis 7, wobei die Querentlüftungsleitung (75) eine Trenneinrichtung (73) aufweist, um eine Fluidübertragung entlang der Querentlüftungsleitung (75) während normaler Betriebsbedingungen zu verhindern, und wobei der Prozessor dazu ausgelegt ist, einen Fehler, wenn die Trenneinrichtung (73) eine Fluidübertragung entlang der Querentlüftungsleitung (75) während anormaler Betriebsbedingungen zugelassen hat, auf der Basis einer starken Änderung des Drucks der Tankleerräume (34, 74) innerhalb der jeweiligen Kraftstofftanks (30, 70) während des Zeitraums zu bestimmen.

9. Verfahren zum Überwachen eines Luftfahrzeugkraftstofftanks (30), das Folgendes umfasst:
Erfassen eines Drucks von Kraftstoff (32) innerhalb eines Kraftstofftanks (30);
Erfassen eines Drucks eines Tankleerraums (34) über dem Kraftstoff (32) innerhalb des Kraftstofftanks (30), wobei der Tankleerraum (34) über eine Entlüftung (50) mit der Umgebung fluidisch gekoppelt ist;
Überwachen der Änderung des Drucks des Kraftstoffs (32) innerhalb des Kraftstofftanks (30) während eines Zeitraums und Überwachen der Änderung des Drucks des Tankleerraums (34) innerhalb des Kraftstofftanks (30) während des Zeitraums und
Bestimmen eines Fehlers, wenn sich sowohl der Druck des Kraftstoffs innerhalb des Kraftstofftanks (30) als auch der Druck des Tankleerraums (34) innerhalb des Kraftstofftanks während des Zeitraums erhöhen, während Kraftstoff (32) in den ersten Kraftstofftank (30) gepumpt wird.

10. Verfahren nach Anspruch 9, wobei das Verfahren ferner das Überwachen der Druckänderungen und das Bestimmen eines Fehlers umfasst, wenn aus dem erhöhten Druck des Tankleerraums (34) eine Blockierung in der Entlüftung (50) oder in einer Entlüftungsleitung (52) zwischen dem Tankleerraum (34) und der Entlüftung (50) abgeleitet wird.

11. Verfahren nach Anspruch 9 oder Anspruch 10, wobei der Kraftstofftank (30) mit einem Ausgleichstank (60) fluidisch gekoppelt ist und das Verfahren ferner das Überwachen der Druckänderungen und das Bestimmen eines Fehlers umfasst, wenn aus den überwachten Druckänderungen, die über normale Betriebsbedingungen hinausgehen, ein bevorstehendes Überlaufen aus dem Kraftstofftank (30) in den Ausgleichstank (60) abgeleitet wird.

12. Verfahren nach einem der Ansprüche 9 bis 11, wobei der Tankleerraum (34) über ein Druckentlastungssystem (54) mit der Umgebung gekoppelt ist und das Verfahren ferner das Überwachen der Druckänderungen und das Bestimmen eines Fehlers umfasst, wenn aus den überwachten Druckänderungen eine Störung oder Aktivierung in dem Druckentlastungssystem (54) abgeleitet wird.

13. Verfahren nach einem der Ansprüche 9 bis 12, das ferner Folgendes umfasst:
Berechnen einer Änderung eines Volumens des Kraftstoffs (32) innerhalb des Kraftstofftanks (30) auf der Basis des erfassten Drucks von Kraftstoff und
Bestimmen eines Fehlers, wenn sich sowohl das Volumen des Kraftstoffs (32) innerhalb des Kraftstofftanks (30) als auch der Druck des Tankleerraums (34) innerhalb des Kraftstofftanks (30) während des Zeitraums verringern.

14. Verfahren nach einem der Ansprüche 9 bis 13, das ferner Folgendes umfasst:
Erfassen eines Drucks eines Tankleerraums (74) über Kraftstoff (72) in einem anderen Kraftstofftank (70), Überwachen der Änderung des Drucks der Tankleerräume (34, 74) innerhalb der jeweiligen Kraftstofftanks (30, 70), wobei die Tankleerräume (34, 74) durch eine Querentlüftungsleitung (75) gekoppelt sind, und
Bestimmen eines Fehlers, wenn eine Druckdifferenz zwischen den Tankleerräumen (34, 74) der jeweiligen Kraftstofftanks (30, 70) über einen Schwellenwert hinausgeht.

15. Verfahren nach Anspruch 14, wobei die Tankleerräume (34, 74) über eine oder mehrere Entlüftungen (50) mit der Umgebung fluidisch gekoppelt sind und das Verfahren ferner das Überwachen der Druckänderungen und das Bestimmen eines Fehlers umfasst, wenn aus den überwachten Druckänderungen eine Blockierung in der Querentlüftungsleitung (75) abgeleitet wird, wenn eine Tankleerraum-Druckdifferenz zwischen den jeweiligen durch die Querentlüftungsleitung (75) gekoppelten Kraftstofftanks (30, 70) auftritt.

16. Verfahren nach einem der Ansprüche 14 bis 15, wobei die Querentlüftungsleitung (75) eine Trenneinrichtung (73) aufweist, um eine Fluidübertragung entlang der Querentlüftungsleitung (75) während normaler Betriebsbedingungen zu verhindern, und das Verfahren ferner das Bestimmen eines Fehlers, wenn die Trenneinrichtung (73) eine Fluidübertragung entlang der Querentlüftungsleitung (75) während anormaler Betriebsbedingungen zugelassen hat, auf der Basis einer starken Änderung des Drucks der Tankleerräume (34, 74) innerhalb der jeweiligen Kraftstofftanks (30, 70) während des Zeitraums umfasst.

## Revendications

1. Aéronef (10), comprenant un réservoir de carburant (30), le réservoir de carburant comprenant un espace mort (34), l'espace mort étant couplé fluidiquement à l'atmosphère ambiante extérieure à l'aéronef (10) par l'intermédiaire d'une mise à l'air (50), l'aéronef comprenant en outre un système de surveillance de réservoir de carburant, le système de surveillance comprenant :
au moins un premier capteur (36) destiné à détecter une pression de carburant (32) à l'intérieur du réservoir de carburant (30) ;
au moins un deuxième capteur (38) destiné à détecter une pression dans l'espace mort (34) au-dessus du carburant (32) à l'intérieur du réservoir de carburant ;
**caractérisé en ce que** le système de surveillance comprend en outre un processeur (40) destiné à surveiller la variation de la pression du carburant à l'intérieur du réservoir de carburant (30) sur une période de temps et à surveiller la variation de la pression dans l'espace mort (34) à l'intérieur du réservoir de carburant sur la période de temps, et destiné à déterminer un défaut si à la fois la pression du carburant à l'intérieur du réservoir de carburant (32) et la pression dans l'espace mort (34) à l'intérieur du réservoir de carburant (32) augmentent sur la période de temps, à mesure que du carburant est pompé dans le réservoir de carburant (30).

2. Aéronef (10) selon la revendication 1, dans lequel le processeur (40) est configuré pour surveiller les variations de pression et pour déterminer un défaut si un blocage dans la mise à l'air (50) ou dans une conduite de mise à l'air (52) entre l'espace mort (34) et la mise à l'air (50) est déduit de la pression ayant augmenté dans l'espace mort (34).

3. Aéronef (10) selon la revendication 1 ou la revendication 2, dans lequel le réservoir de carburant (30) est couplé fluidiquement à un réservoir tampon (60), et le processeur (40) est configuré pour surveiller les variations de pression et pour déterminer un défaut si un débordement imminent du réservoir de carburant (30) vers le réservoir tampon (60) est déduit des variations de pression surveillées dépassant des conditions normales de fonctionnement.

4. Aéronef (10) selon l'une quelconque des revendications précédentes, dans lequel l'espace mort (34) est couplé au milieu ambiant par l'intermédiaire d'un système de décharge de pression (54), et le processeur (40) est configuré pour surveiller les variations de pression et pour déterminer un défaut si une défaillance ou une activation dans le système de décharge de pression (54) est déduite des variations de pression surveillées.

5. Aéronef (10) selon l'une quelconque des revendications précédentes, dans lequel le processeur (40) est configuré pour calculer une variation d'un volume du carburant (32) à l'intérieur du réservoir de carburant (30) sur la base du premier capteur (36), et dans lequel le processeur (40) est configuré pour déterminer un défaut si à la fois le volume du carburant (32) à l'intérieur du réservoir de carburant (30) et la pression dans l'espace mort (34) à l'intérieur du réservoir de carburant (30) diminuent sur la période de temps.

6. Aéronef (10) selon l'une quelconque des revendications précédentes, comprenant en outre au moins un troisième capteur (78) destiné à détecter une pression dans un espace mort (74) au-dessus du carburant (72) dans un autre réservoir de carburant (70), dans lequel le processeur (40) est configuré pour surveiller la variation de la pression dans les espaces morts (34, 74) à l'intérieur des réservoirs de carburant (30, 70) respectifs, dans lequel les espaces morts (34, 74) sont couplés par une conduite de mise à l'air transversale (75), et dans lequel le processeur (40) est configuré pour déterminer un défaut si une différence de pression entre les espaces morts (34, 74) des réservoirs de carburant (30, 70) respectifs dépasse un seuil.

7. Aéronef (10) selon la revendication 6, dans lequel les espaces morts (34, 74) sont couplés fluidiquement au milieu ambiant par l'intermédiaire d'une ou de plusieurs mises à l'air (50) et le processeur (40) est configuré pour surveiller les variations de pression et pour déterminer un défaut si un blocage dans la conduite de mise à l'air transversale (75) est déduit des variations de pression surveillées dans le cas où un différentiel de pression dans les espaces morts se produit entre les réservoirs de carburant (30, 70) respectifs couplés par la conduite de mise à l'air transversale (75).

8. Aéronef (10) selon l'une quelconque des revendications 6 à 7, dans lequel la conduite de mise à l'air transversale (75) est pourvue d'un isolateur (73) pour empêcher un transfert de fluide le long de la conduite de mise à l'air transversale (75) dans des conditions normales de fonctionnement, et dans lequel le processeur est configuré pour déterminer un défaut lorsque l'isolateur (73) a permis un transfert de fluide le long de la conduite de mise à l'air transversale (75) dans des conditions anormales de fonctionnement sur la base d'une variation brusque de la pression dans les espaces morts (34, 74) à l'intérieur des réservoirs de carburant (30, 70) respectifs sur la période de temps.

9. Procédé de surveillance d'un réservoir de carburant (30) d'aéronef, comprenant :
la détection d'une pression de carburant (32) à l'intérieur d'un réservoir de carburant (30) ;
la détection d'une pression dans un espace mort (34) au-dessus du carburant (32) à l'intérieur du réservoir de carburant (30), l'espace mort (34) étant couplé fluidiquement au milieu ambiant par l'intermédiaire d'une mise à l'air (50) ;
la surveillance de la variation de la pression du carburant (32) à l'intérieur du réservoir de carburant (30) sur une période de temps et la surveillance de la variation de la pression dans l'espace mort (34) à l'intérieur du réservoir de carburant (30) sur la période de temps, et
la détermination d'un défaut si à la fois la pression du carburant à l'intérieur du réservoir de carburant (30) et la pression dans l'espace mort (34) à l'intérieur du réservoir de carburant augmentent sur la période de temps, à mesure que du carburant (32) est pompé dans le premier réservoir de carburant (30).

10. Procédé selon la revendication 9, le procédé comprenant en outre la surveillance des variations de pression et la détermination d'un défaut si un blocage dans la mise à l'air (50) ou dans une conduite de mise à l'air (52) entre l'espace mort (34) et la mise à l'air (50) est déduit de la pression ayant augmenté dans l'espace mort (34).

11. Procédé selon la revendication 9 ou la revendication 10, dans lequel le réservoir de carburant (30) est couplé fluidiquement à un réservoir tampon (60), et le procédé comprenant en outre la surveillance des variations de pression et la détermination d'un défaut si un débordement imminent du réservoir de carburant (30) vers le réservoir tampon (60) est déduit des variations de pression surveillées dépassant des conditions normales de fonctionnement.

12. Procédé selon l'une quelconque des revendications 9 à 11, dans lequel l'espace mort (34) est couplé au milieu ambiant par l'intermédiaire d'un système de décharge de pression (54), et le procédé comprenant en outre la surveillance des variations de pression et la détermination d'un défaut si une défaillance ou une activation dans le système de décharge de pression (54) est déduite des variations de pression surveillées.

13. Procédé selon l'une quelconque des revendications 9 à 12, comprenant en outre :
le calcul d'une variation d'un volume du carburant (32) à l'intérieur du réservoir de carburant (30) sur la base de la pression détectée de carburant, et
la détermination d'un défaut si à la fois le volume du carburant (32) à l'intérieur du réservoir de carburant (30) et la pression dans l'espace mort (34) à l'intérieur du réservoir de carburant (30) diminuent sur la période de temps.

14. Procédé selon l'une quelconque des revendications 9 à 13, comprenant en outre :
la détection d'une pression dans un espace mort (74) au-dessus du carburant (72) dans un autre réservoir de carburant (70), la surveillance de la variation de la pression dans les espaces morts (34, 74) à l'intérieur des réservoirs de carburant (30, 70) respectifs, les espaces morts (34, 74) étant couplés par une conduite de mise à l'air transversale (75), et
la détermination d'un défaut si une différence de pression entre les espaces morts (34, 74) des réservoirs de carburant (30, 70) respectifs dépasse un seuil.

15. Procédé selon la revendication 14, dans lequel les espaces morts (34, 74) sont couplés fluidiquement au milieu ambiant par l'intermédiaire d'une ou de plusieurs mises à l'air (50), et le procédé comprenant en outre la surveillance des variations de pression et la détermination d'un défaut si un blocage dans la conduite de mise à l'air transversale (75) est déduit des variations de pression surveillées dans le cas où un différentiel de pression dans les espaces morts se produit entre les réservoirs de carburant (30, 70) respectifs couplés par la conduite de mise à l'air transversale (75).

16. Procédé selon l'une quelconque des revendications 14 à 15, dans lequel la conduite de mise à l'air transversale (75) est pourvue d'un isolateur (73) pour empêcher un transfert de fluide le long de la conduite de mise à l'air transversale (75) dans des conditions normales de fonctionnement, et le procédé comprenant en outre la détermination d'un défaut lorsque l'isolateur (73) a permis un transfert de fluide le long de la conduite de mise à l'air transversale (75) dans des conditions anormales de fonctionnement sur la base d'une variation brusque de la pression dans les espaces morts (34, 74) à l'intérieur des réservoirs de carburant (30, 70) respectifs sur la période de temps.
